# EUROPEAN PATENT APPLICATION

(11) **EP 1 380 846 A1**
(43) Date of publication of application: **14.01.2004**
(21) Application number: 02380157.4
(22) Date of filing: 10.07.2002
(51) Int. Cl.: G01P 13/02, G01P 5/02

(54) **Vertical indicator for wind direction,speed and risk**

(71) Applicant: Luque Canova, Miguel Angel, 28250 Torrelodones (Madrid) (ES)
(72) Inventor: Luque Canova, Miguel Angel, 28250 Torrelodones (Madrid) (ES)
(74) Representative: Maldonado Jordan, Julia

(57) **Abstract**

A vertical marking device is described, capable of being assembled in any area where needed, by means of which a precise indication of the direction and the speed of the prevailing wind is provided for the purpose of knowing the degree of risk its speed implies. The marking device has a vertical support pole to which a rotating bushing is associated with respect to the pole shaft, supporting a vertically positioned indicator element or sign, which in turn supports one or more anemometric arrows, preferably two, one on each side of the body, joined together and capable of simultaneous rotation in the vertical plane by means of pivoting with respect to the pin which joins them on their upper respective end, and which crosses through the body in a position close to its innermost, upper corner. The body of the indicator element or sign incorporates an arrow element on its upper horizontal edge, with the arrowhead towards the inside, and it also has the lateral sides with impressions dividing them into differently colored sectors, also being able to include direct reading numerical values.

## Description

### Object of the Invention

The present invention refers to a vertical marking indicating wind direction, speed and risk, which provides essential novel features and significant advantages with respect to the means known and used for the same purposes in the current state of the art.

More specifically, the invention proposes the development of a marking device capable of being placed on roads of any type, expressways, airports, etc., able to provide information about the features of the wind blowing in that area, a simple look at the device being enough to rapidly and precisely understand the risk derived from the blowing wind. For this, the device incorporates elements such as a flat vertical sign capable of rotating, with respect to a support pole, in the direction in which it is pushed by the wind; an anemometric arrow on both sides of said vertical sign, each anemometric arrow being jointly connected with the one on the other side, and being capable of pivoting, with respect to their highest end of fixation to said flat sign, between extreme positions separated from each other by an angular distance of 90°; and an element shaped in the form of an arrow and jointly connected to the upper edge of the flat sign, such that when seen from a higher height, it also permits knowing the direction of origin of the wind with a simple look. For its part, the flat sign incorporates wind intensity assessment means; and which preferably consist of the application of a color code on each one of its lateral sides.

The field of application of the invention is comprised within the industrial sector dedicated to the manufacturing and/or assembly of measurement and control apparatuses and instruments, especially for weather applications.

### Background and Summary of the Invention

In the current state of the art, different types of devices for indicating the wind direction and intensity are known. In this sense, although the weathervanes located on the high parts of towers, churches or other buildings constitute the oldest known instruments for these purposes, the truth is that they are still currently used as they are simple and economical instruments to manufacture and assemble, and since the indications provided with respect to the direction of the wind are considerably helpful. These devices, together with the anemometers, permit knowing the wind direction and speed, and therefore the intrinsic risk involved in the area in which they are assembled.

Recently, other devices known as "socks" have been developed, hung from the upper end from respective poles, and consisting of hollow bodies constructed with a flexible material, which decrease in diameter from the entrance towards the opposite end, said entrance being kept open by virtue of the incorporation of a rigid metallic ring or the like, and such that when the wind is calm, the sock falls downwards by virtue of its own weight, but when the wind blows and passes through the inside of the sock, the thrust derived from the speed of the passing wind makes the sock elevate to a more or less high contour height, depending on the intensity of that thrust. As a result, depending on the position adopted by the sock in each moment, not only can the direction in which the wind is blowing be known, but also its intensity. This type of devices have been very useful in their application to the case of roads and aviation fields, but they have a very important drawback derived from their assembly in inclemency, and which consists of a short useful life which implies the frequent necessity of substitution, which implies a very high cost. In addition, another drawback associated to the socks consists of the fact that the indications are provided according to calculations carried out for measuring wind in knots, which indubitably is not a habitual measurement magnitude, and therefore requires associating that measurement to other magnitudes which are conceptually better understood, or at least mentally in a faster manner, such as occurs when the speeds are expressed in km/h.

Taking into consideration the drawbacks associated with the currently existing devices, the present invention has proposed as the fundamental objective the fact of providing a device by means of which such drawbacks are effectively solved.

This objective has been fully reached by means of the marking which will subsequently be object of description, capable of being installed in places such as airports, roads and expressways, bridges, industries, nuclear power stations, refineries, maritime platforms, railways or any other in which it is necessary or advisable to precisely and rapidly know the intensity and/or direction of the blowing wind, and which in one preferred embodiment thereof, is composed of a set of elements associated to a perfectly vertically positioned support pole, which on its lower end is fixed to the ground (or other support) with the use of a stabilizing plate, and which on its upper end is shaped in order to accept, with the use of bearings, the coupling of a flat sign which essentially consists of a quadrangular prismatic body, of reduced thickness, having a broad surface area on each side exposed to the passage of the wind, such that it can be pushed and directed by the latter, according to how it moves, by means of the rotation of said signal on the horizontal plane, and along the complete circumference, that is to say, 360° around the support pole. In the proximities of the inner, upper corner of the flat sign, a through hole has been foreseen, intended to house a bushing which in turn houses a transversal shaft, with little friction, joined by each one of its ends to an anemometric arrow with rotational freedom together with said shaft, and such that in calm wind conditions and therefore without the arrows being subjected to any type of thrust, they will drop due to their own weight and will occupy a first extreme position, totally vertical, while when the wind blows and exercises its thrusting action on said anemometric arrows, both rotate together and simultaneously with respect to their upper pivoting shaft, being moved through an angle which in extreme positions could reach a value of 90° with respect to the vertical. The surface of each side of the flat sign has been divided into strips, preferably approximately triangular shaped strips, with the vertex in the pivoting shaft, such that depending on the rotation both anemometric arrows carry out, therefore on the position they reach, said arrows reach both areas, being able to know, as a result, the order of magnitude of the wind speed with a simple glance. The choice of a color code for said triangular strips makes the position of the anemometric arrows be rapidly associated to the supposed risk which is implied by the wind intensity. In this sense, the use of a color code according to the international nomenclature is particularly indicated, in which a green strip indicates that the wind is acceptable, a yellow strip indicates adopting certain precautions, and a red strip can indicate a certain danger will increase with the height increase reached by both anemometric arrows.

With a marking device such as the one commented, a vehicle driver, an aircraft pilot or any other may instantly know the prevailing wind conditions, and as a result, adopt the suitable measures and/or precautions for the maneuver to be carried out. However, when it is a question of knowing the prevailing conditions from an elevated position, as occurs, for example, in the case of the flight devices known as "light" (light planes, ultra lights, etc.), sometimes there are problems in obtaining the desired information with the desired ease. For such purpose, the invention proposes the incorporation of an additional element, shaped like an arrow, and jointly connected to the upper edge of the flat sign, oriented towards the position occupied by the support post. In this manner, according to how the flat sign is thrust by the action of the wind passage, the arrow will always indicate the direction of origin of the latter, thus implying a significant aid for pilots of this type of aircrafts. The visualization of the lateral strips are provides them with the necessary complementary information so that they can carry out any type of maneuver with the minimum possible risk.

### Brief Description of the Drawings

These and other features and advantages of the invention will become more clearly evident as from the following detailed description of a preferred embodiment example, only given as an illustrative and non-limiting example, with reference to the attached drawings in which:
Figure 1 shows a side elevational view of a marking constructed in accordance to the invention;
Figure 2 shows an upper plan view of the device of figure 1, and
Figure 3 shows a perspective view of the element used as a vertical sign of the previously mentioned figures.

### Description of the Preferred Embodiment

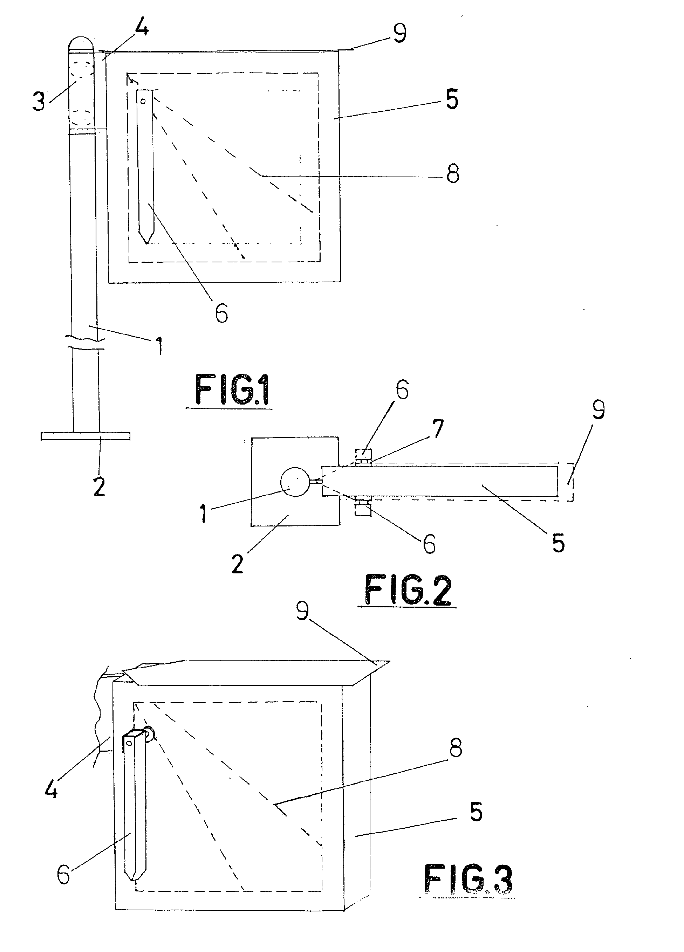

As indicated in the proceeding, the detailed description of the preferred embodiment of the marking of the invention will be carried out with the use of the attached drawings, through which the same numerical references are used when designating equal or equivalent parts. For this purpose, first seeing the representation in figure 1, a side elevational view showing the proposed object can be seen, and it is essentially constituted as from a preferably metallic support pole 1, of a material such as galvanized steel or the like, which is extended erectly, perfectly vertical, connected on its lower end to a flat stabilizing plate 2, prepared and adapted to be fixed to the ground or other support base, while its upper end has been mechanized so as to accept the coupling of a bushing capable of freely rotating with respect to the pole shaft by virtue of the incorporation of suitable bearings (not shown) of a low friction index. Said bushing 3 is generally cylindrical shaped and is jointly coupled to a plate 4 part or similar, extended according to an edge of the cylinder for the purpose of said joint plate 4 being able to also adopt a perfectly vertical position when the assembly is in its operating condition. Said joint plate 4 serves as an interconnection element between the rotating bushing 3 and an indicator element 5, or sign, constituted of a generally quadrangular, prismatic shaped body, joined to the Interconnection plate 4 by one of its smaller, lateral sides, such that both bases of the prism are located In a perfectly vertical position, thus showing two surface areas, in correspondence with both bases, upon which the blowing wind acts at all times in the assembly installation area. As can be understood, the body 5 is able to rotate in the horizontal plane, around the shaft of the post 1 by virtue of its connection to the bushing 3 by means of the joint plate 4.

According to that inferred by the proceeding, the device of the invention acts as if it were a weathervane in the sense that it has a pair of surfaces (one on each side of the body 5) capable of being impacted by the blowing wind, but unlike a weathervane construction, the surfaces of the body 5 are of a comparatively larger size than in the case of a weathervane, and in addition, the arrangement of the invention lacks the tip part present in the weathervanes. In this case, as has been said, only the leeward portion is necessary given that the latter has a sufficient surface area for the specified purpose.

Associated to said sign element 5, the assembly of a pair of anemometric arrows 6 has been foreseen, one on each side, respectively adjacent to said bases, joined together by means of a transversal pin (not referenced) housed with a low friction Index In a bushing which passes through the body 5 close to its innermost, upper corner. This bushing is visible in figure 2, and it has been indicated with the numerical reference 7. Said pin constitutes a free pivoting means for said anemometric arrows 6, such that these adopt a fallen, vertical position by virtue of their own weight when they are not subjected to any thrusting action, while when they are the object of thrusting by some external force, as occurs when the wind acts upon them, they are able to rotate between the vertical standstill position and an upper extreme horizontal position, through a 90° angle, whose rotational angle value will logically depend on the thrust received Therefore, it will be understood that the dimensional features of each anemometric arrow 6 are calculated such that the different inclinations adopted when they are thrust by the wind correspond to predetermined speeds of the blowing wind.

For this purpose, both bases of the prismatic body constituting the sign element 5 have a surface division which in the case of figure 1 has been indicated with dotted lines 8, and which are extended as from the position corresponding to the pivoting point, determining with it approximately triangular areas which will be successively reached by the anemometric arrows 6 as long as the wind blows with enough intensity In fact; as will be understood, each anemometric arrow 6 must increase its rotational angle with respect to the pivoting point as from the vertical standstill position in order to successively reach the different areas, to do so, it needs a progressively larger thrust, this circumstance having a direct relationship with the speed of the wind acting upon said anemometric arrows. In this manner, the different angular sectors into which the surface of the bases of the body 5 has been divided can be associated to incremental spans of the speed of the wind, and therefore to the greater or lesser risk it may involve. In an illustrative but in no way limiting preferred embodiment, the surface area of each base can be divided into three differently colored parts, for example, in green, yellow and red, following the international nomenclature in relation to the increase of risk or danger associated to any compromising situation. In any case, it should be understood that this indication is only one possible form of the ample variety of indications that could be adopted. In addition, if desired, the surface divisions could also have numerical impressions indicative of the speeds of the wind in relation to each one of the areas, with the advantage over the known devices that such printed indications can be carried out in any habitual magnitude in the country or area of assembly, such as km/h, miles or any other, it being enough to adopt anemometric arrows designed and calculated for that magnitude, and the rest of the device being perfectly valid without any modification whatsoever. As can be understood, the adoption of a color code of the mentioned type represents a great help for an outside observer, since a simple look is enough to know, by virtue of the strip in which the anemometric arrow 6 is located, the eventual dangerousness associated to the blowing wind in order to carry out the necessary activity.

Finally, as a complementary element of the previously described assembly, the invention foresees that the body 5 incorporates an element 9 on its upper edge, shaped like a flat arrow, perfectly adhered to said edge, and whose arrowhead is directed towards the inside. In this manner, an outside observer located at a higher height than the marking device can precisely know at all times the direction of origin of the prevailing wind, as occurs for example in the case of flights with apparatuses of the types called "light", and as a result, carry out the maneuvers in the most suitable manner. The position of the anemometric arrows 6 also indicates the range of speed with which the wind is blowing in that moment.

Until now, the description carried out in relation to the device of the invention has been shown for its application to the case of measuring the direction and the speed of the wind. However, as skilled persons in the matter will understand, this application is only illustrative since the device could also have other applications derived from the influence of the wind. In this sense, the case of its adaptation for measuring the intensity of the surge of the sea can be cited as an example, since, as is known, this is the result of the intensity with which the wind moves.

Figure 2 is an upper plan view of the same device shown in figure 1. In this representation, for the purpose of being able to see the details of the embodiment, the upper arrow element 9 has been shown with dashed lines, and also with greater dimensions than the sign body 5 in order to differentiate it from the latter. However, it should be understood that this embodiment form is only illustrative, for the purpose of a better understanding, and that the dimensions of said indicator arrow element 9 will be those deemed the most suitable for the application to which the assembly is intended. The anemometric arrows 6 appear shown as "C" shaped profiles, with the purpose of adapting them to the weight necessities imposed by the application to which it is intended. It has even been foreseen that, in case necessary, the ideal weight of such anemometric arrows 6 can be aided in being reached by making one or more holes in the inner side wall of the profile, as deemed suitable. In the figure, the bushing 7 appears, which completely crosses through the body 5, and inside of which the drift pin (not referenced) of both anemometric arrows 6 is housed.

Concerning figure 3 of the drawings, a separate view of the sign element 5 has been shown, carried out in perspective for the purpose of better seeing the shape adopted by the upper indicator arrow element 9. Again, the condition should be made that the comparative dimensions shown for the indicator arrow element 9 are only illustrative, it being possible to be of any in the practical embodiments carried out.

Also, throughout the description; reference has been made on different occasions to the expression "perfect verticality" of the elements comprising the assembly. This concept must be understood in the broadest manner possible, and it constitutes an essential condition for the precise functioning of the assembly. In fact, the verticaiity of the post 1 is absolutely necessary for the purpose of preventing the generation of components of forces, derived from the weight of the elements, which could influence in the development of some tendency to the rotation of the body 5 in the horizontal plane or of the anemometric arrows 6 in the vertical plane.

It will also be understood that a perfectly facing positioning between the two anemometric arrows 6 is necessary for the purpose of being able to ensure an indication corresponding exactly to both sides of said body. The joint connection to the drift pin ensures that there cannot be relative shifts between both anemometric arrows 6, thus permitting that an absolute precision can be reached.

Lastly, it can also be seen that the previous description has been made on the basis of two anemometric arrows 6, respectively located on each side of the body 5 constituting the flat vertical sign. The form of assembly constitutes the preferred embodiment, but in no case should it be understood as limiting, since it would also be possible to use one single arrow 6 on one side or the other of said body 5 of the flat vertical sign.

As can be understood, there are also some mechanical features that, depending on each specific application, could be substituted by other equivalents, but of an electronic nature. For example, the marking device of the invention could incorporate an electronic panel provided with a display screen by means of which shows the outside observer, for example, the representation of a vehicle, and whose bottom of the display screen could be lighted with different colors by virtue of the wind intensity and the associated risk, for example, in the same colors as previously indicated.

It is not considered necessary to extend the content of this description so that a skilled person in the matter can understand its scope and the advantages derived from the invention, as well as to develop and carry out into practice the object thereof.

However, it should be understood that the invention has been described according to a preferred embodiment thereof, due to which it is capable of being modified without it implying any alteration whatsoever of the basis of said invention, such modifications being able to affect particularly the shape, the size and/or the manufacturing materials of the assembly or its parts.

## Claims

1. A vertical marking indicating wind direction, speed and risk, intended to be assembled in areas such as, for example, highways of any type, airports, bridges, energy power stations, or any other area in which it is necessary to know the features of the prevailing wind, and by means of which precise information is provided to any outside observer with a simple and quick look towards the device in relation to the direction of origin of the wind and of the speed with which it is moving, from both a low position as well as from an elevated position above the height of the marking, **characterized in that** it has a pole (1) fixed on its lower end by means of a stabilizing plate (2) fixed to the ground or any other support base, said pole being arranged in perfect verticality, and on whose upper end, with the collaboration of bearings, a bushing (3) has been coupled, capable of rotating on the horizontal plane around the complete circumference, supporting, with the collaboration of a joint plate (4), an indicator element (5) or sign, which is generally of a prismatic shape, of broad bases and of a reduced height, coupled to the bushing (3) in perfect verticality and capable of freely rotating together with the latter when thrust by the wind, in the horizontal plane along the complete circumference around the pole (3) until a position of minimum resistance and therefore coincident with the direction of the wind, and said indicator element (5) or sign also having one or two anemometric arrows (6), preferably one anemometric arrow on each side, adjacent to the respective base of the prismatic body, jointly connected together by means of a pin housed, with low friction, inside a bushing (7) coupled to the indicator element (5), which crosses through it in the proximities of its innermost upper corner, and both anemometric arrows (6) being of free rotation, such that in the standstill position, they adopt perfectly vertical positions, while when the blowing wind acts upon them, it thrusts them in order to simultaneously shift them, rotating with respect to the pivoting point constituted by the bushing (7) and the drift pin housed inside of it, and shifting through an angle which is a direct function of the intensity (or speed) with which the incident wind is blowing.

2. A marking according to claim 1, **characterized in that** it also comprises the incorporation of an element (9) joined to the upper edge of the body (5), shaped like an arrow with the point towards the inside, and therefore rotational together with said sign (5), thus constituting an element pointing in the direction of origin of the wind when seen from a higher position that the marking device.

3. A marking according to claim 1 or 2, **characterized in that** the surface of the bases of the body (5) have impressions (8) dividing them into approximately triangular sectors, with a common vertex in the pivoting point of the anemometric arrow (or arrows) (6).

4. A marking according to claim 3, **characterized in that** the areas provided by the divisions (8) are indicative of the speed of the wind when they are reached by said anemometric arrow (or arrows) (6) with its rotation, in the vertical plane, from the standstill position (calm wind), and **in that** such sectors are also capable of having different colorings indicative of the different degrees of risk associated to the speed of the wind.

5. A marking according to claim 3 or 4, **characterized in that** sectors obtained by means of the divisions (8) are also capable of having direct reading numerical impressions, indicative of order of magnitude ranges of the speed of the wind.

6. A marking according to one or more of the previous claims, **characterized in that** the assembly can include electronic indicator means such as an information display screen showing, for example, the representation of a vehicle, and whose bottom of the display screen is capable of being lit with different colors by virtue of the speed of the blowing wind and therefore of the risk associated to it.
